# EUROPÄISCHE PATENTANMELDUNG

(11) **EP 4 530 120 A2**
(43) Veröffentlichungstag der Anmeldung: **02.04.2025**
(21) Anmeldenummer: 24202892.6
(22) Anmeldetag: 26.09.2024
(51) Int. Cl.: B60L 50/64, B60L 58/26, H01M 10/613, H01M 10/625, H01M 10/6556, H01M 10/6568

(54) **FLUIDVERTEILERANORDNUNG EINES TEMPERIERKREISLAUFES**

(30) Priorität: 26.09.2023 DE 102023126089
(71) Anmelder: Voss Automotive GmbH, 51688 Wipperfürth (DE)
(72) Erfinder: KOENEN, Andreas, 42855 Remscheid (DE); HUEBNER, Benjamin, 51580 Reichshof (DE); OSINANKOM, Makila, 41399 Dormagen (DE); WILMS, Waldemar, 51709 Marienheide (DE)
(74) Vertreter: Dr. Solf & Zapf Patent- und Rechtsanwalts PartG mbB

(57) **Zusammenfassung**

Die vorliegende Erfindung betrifft eine Fluidverteileranordnung 1 eines Temperierkreislaufes zum Temperieren eines elektrischen Gerätes. Die Fluidverteileranordnung 1 weist zumindest eine Vorlaufleitung 2, welche mit einem Vorlauf fluidisch verbindbar ist, und zumindest eine im Wesentlichen parallel zur Vorlaufleitung 2 verlaufende Rücklaufleitung 4, welche mit einem Rücklauf fluidisch verbindbar ist, auf. Dabei sind mittels der Vorlaufleitung 2 und der Rücklaufleitung 4 der Vorlauf und der Rücklauf fluidisch mit dem elektrischen Gerät verbindbar. Weiterhin ist die Vorlaufleitung 2 mittels zumindest einer Zufuhrleitung 6 mit einem Anschlussverbinder 10 zur fluidischen Verbindung mit dem elektrischen Gerät verbunden. Die Rücklaufleitung 4 ist dabei mittels zumindest einer Abfuhrleitung 8 mit einem weiteren Anschlussverbinder 10 zur fluidischen Verbindung mit dem elektrischen Gerät verbunden. Die Vorlaufleitung 2 und die Rücklaufleitung 4 sind zudem derart zueinander beabstandet angeordnet, dass die Zufuhrleitung 6 und die Abfuhrleitung 8 und die jeweiligen Anschlussverbinder 10 zwischen der Vorlaufleitung 2 und der Rücklaufleitung 4 angeordnet sind.

## Beschreibung

Die Erfindung betrifft eine Fluidverteileranordnung eines Temperierkreislaufes zum Temperieren eines elektrischen Gerätes. Insbesondere handelt es sich bei dem elektrischen Gerät um eine Batterie, im Besonderen eine Batterie eines Elektroautomobils. Die Fluidverteileranordnung weist zumindest eine Vorlaufleitung und zumindest eine im Wesentlichen parallel zur Vorlaufleitung verlaufende Rücklaufleitung auf. Die Vorlaufleitung ist mit einem Vorlauf fluidisch verbindbar und die Rücklaufleitung ist mit einem Rücklauf fluidisch verbindbar. Die Vorlaufleitung und die Rücklaufleitung sind derart ausgebildet, dass der Vorlauf und der Rücklauf mittels der Vorlaufleitung und der Rücklaufleitung fluidisch mit dem elektrischen Gerät verbindbar sind. Des Weiteren betrifft die Erfindung einen Anschlussverbinder und einen Verbinderhalter einer derartigen Fluidverteileranordnung.

Derartige Fluidverteileranordnungen sind insbesondere aus der Batterietemperierung von elektrischen Automobilen bekannt. Die Batterien sind insbesondere mittels der Fluidverteileranordnungen heizbar, insbesondere bei niedrigen Umgebungstemperaturen, und/oder kühlbar, beispielsweise bei hohen Umgebungstemperaturen und/oder unter Last. Eine Batterie kann dabei aus einem oder mehreren Batteriemodulen gebildet werden, welche elektrisch miteinander verschaltet werden. Es ist dabei bekannt, dass die einzelnen Batteriemodule jeweils fluidisch temperiert werden, indem jedes Batteriemodul mit dem Vorlauf und dem Rücklauf der Fluidverteileranordnungen fluidisch verbunden ist.

Es ist beispielsweise aus der EP 3 525 280 B1 oder der WO 2013/170927 A1 bekannt, dass bei den Fluidverteileranordnungen von Elektroautomobilen die Vorlaufleitung und die Rücklaufleitung zur Einsparung von Bauraum dicht nebeneinander verlaufend und insbesondere direkt oberhalb der Batterie angeordnet sind. Dabei weist insbesondere die aus der EP 3 525 280 B1 bekannte Vorlaufleitung bzw. die Rücklaufleitung Abzweigelemente auf, welche unmittelbar an das jeweilige Batteriemodul angeschlossen werden.

Die bekannten Fluidverteileranordnungen haben jedoch den Nachteil, dass die Vorlaufleitung und die Rücklaufleitung dicht beieinanderliegend angeordnet sind, so dass die Anordnung der Leitungen relativ steif und unflexibel ist. Weiterhin weisen die bekannten Fluidverteileranordnungen eine große Bauhöhe auf, so dass insbesondere oberhalb der Batterien stets ausreichend Platz zur Verfügung gestellt werden muss. Abweichende Anordnungen der jeweiligen Leitungen, beispielsweise zur Anpassung an bestimmte Einbauverhältnisse, sind daher nicht oder nur mit einem großen Aufwand möglich. Insbesondere müssen die jeweiligen Leitungen speziell für die jeweiligen Einbauverhältnisse gefertigt werden und sind nicht auf abweichende Einbauverhältnisse anpassbar, was die Herstellung und Bereitstellung von Fluidverteileranordnungen für verschiedene Einbauverhältnisse bzw. Anwendungen sehr aufwändig gestaltet.

Der Erfindung liegt die Aufgabe zugrunde, eine Fluidverteileranordnung aus dem Stand der Technik derart zu verbessern, dass sie die bekannten Nachteile überwindet und insbesondere an unterschiedliche Einbauverhältnisse anpassbar ist.

Die Aufgabe wird erfindungsgemäß durch die Merkmale des Anspruchs 1 gelöst. Dadurch, dass die Vorlaufleitung mittels zumindest einer Zufuhrleitung mit einem Anschlussverbinder zur fluidischen Verbindung mit dem elektrischen Gerät verbunden ist, und die Rücklaufleitung mittels zumindest einer Abfuhrleitung mit einem weiteren Anschlussverbinder zur fluidischen Verbindung mit dem elektrischen Gerät verbunden ist, und die Vorlaufleitung und die Rücklaufleitung derart zueinander beabstandet angeordnet sind, sind die Zufuhrleitung und die Abfuhrleitung und die jeweiligen Anschlussverbinder zwischen der Vorlaufleitung und der Rücklaufleitung angeordnet. Die erfindungsgemäße Ausführung hat den Vorteil, dass die Fluidverteileranordnungen flacher, insbesondere in Kombination mit einer an die Fluidverteileranordnung angeschlossenen Batterie, ausgebildet werden können. Zudem können durch die Zufuhrleitung und die Abfuhrleitung die Vorlaufleitung und die Rücklaufleitung weiter zueinander und insbesondere von den Fluidanschlüssen der Batterie beabstandet angeordnet werden, so dass die Anpassung an verschiedene Einbauverhältnisse ermöglicht wird.

In einer vorteilhaften Ausführungsform der Erfindung ist die Vorlaufleitung mittels eines Verteilerstücks fluidisch mit der Zufuhrleitung verbunden. Alternativ oder ergänzend kann vorgesehen sein, dass vorteilhaft auch die Rücklaufleitung mittels eines Verteilerstücks fluidisch mit der Abfuhrleitung verbunden ist.

Insbesondere weist die Vorlaufleitung und/oder die Rücklaufleitung mehrere Verteilerstücke auf, welche zweckmäßig voneinander in gleichen und/oder unterschiedlichen Abständen angeordnet und durch zwischen den jeweiligen Verteilerstücken ausgebildete Rohrabschnitte fluidisch verbunden sind. Auch kann vorgesehen sein, dass an das jeweilige Verteilerstück mehr als eine Zufuhrleitung bzw. Abfuhrleitung anschließbar bzw. angeschlossen ist, wobei insbesondere ein bestimmtes Verteilerstück entweder ausschließlich mit Zufuhrleitungen oder ausschließlich mit Abfuhrleitungen verbindbar bzw. verbunden ist. Zweckmäßig ist diese Ausführung besonders vorteilhaft, wenn beispielsweise die Anschlüsse zweier zu temperierender Batteriemodule einer Batterie dicht beieinander angeordnet sind.

Besonders vorteilhaft kann das Verteilerstück mindestens ein Verbindungselement, insbesondere mehrere Verbindungselemente, zum fluidischen Steckverbinden der Zufuhrleitung oder der Abfuhrleitung aufweisen. Es hat sich dabei als besonders vorteilhaft erwiesen, dass das jeweilige Verbindungselement als ein Aufsteckdorn ausgebildet ist, auf welchen die Zufuhrleitung oder die Abfuhrleitung aufgesteckt ist. Der Aufsteckdorn stellt dabei eine besonders aufwandsarme Montage der Zu- bzw. Abfuhrleitung an dem Verteilerstück bereit.

Zur Verbesserung der Anpassungsfähigkeit der Fluidverteileranordnung ist es gemäß einer besonderen Ausführung vorgesehen, dass die Zufuhrleitung und/oder die Abfuhrleitung zumindest einen Wellrohrabschnitt mit einem gewellten Rohrmantel und zumindest zwei Glattrohrabschnitte mit einem glatten Rohrmantel aufweisen. Dabei ist zweckmäßig der zumindest eine Wellrohrabschnitt zwischen den Glattrohrabschnitten ausgebildet. Insbesondere stellen die Glattrohrabschnitte eine vorteilhafte Steifigkeit der Zu- bzw. Abfuhrleitung, insbesondere im Bereich von Anschlussstellen an die Vor- oder Rücklaufleitung bzw. an die jeweiligen Verteilerstücke und den jeweiligen Anschlussverbinder bereit. Vorteilhaft verbessern die Wellrohrabschnitte die Flexibilität der Zu- bzw. Abfuhrleitung, so dass die Fluidverteileranordnung besser an unterschiedliche Einbauverhältnisse anpassbar ist.

Vorzugsweise weist/weisen der/die Anschlussverbinder gemäß einer besonderen Ausführung einen Geräteanschluss zur Verbindung mit einem männlichen oder weiblichen Steckanschluss des elektrischen Gerätes und einen Leitungsanschluss zur Verbindung mit der Zufuhrleitung oder Abfuhrleitung auf.

Zweckmäßig kann ergänzend auch vorgesehen sein, dass der Anschlussverbinder insbesondere als ein Winkelsteckverbinder ausgebildet ist, wobei der Geräteanschluss und der Leitungsanschluss in einem Winkel zueinander ausgebildet sind. Vorteilhaft beträgt der Winkel dabei 90°. Durch die Ausbildung als Winkelsteckverbinder können die Fluidverteileranordnungen flacher, insbesondere in Kombination mit einer an die Fluidverteileranordnung angeschlossenen Batterie, ausgebildet werden.

Zur vorteilhaften, insbesondere aufwandsarmen, Montage und zweckmäßig für eine sichere Anordnung der Anschlussverbinder kann vorgesehen sein, dass zumindest ein Anschlussverbinder in einer Verbinderaufnahme eines Verbinderhalters rastend angeordnet ist. Zweckmäßig weist dabei der Verbinderhalter ein Montagemittel zur Fixierung an einer Positionierungseinrichtung auf. Diese Ausführung ermöglicht vorteilhaft, dass die Verbinderhalter an der Positionierungseinrichtung vormontiert werden, so dass die Montage vereinfacht wird. Besonders bevorzugt ist dabei die Positionierungseinrichtung an dem elektrischen Gerät selbst ausgebildet. Beispielsweise kann es sich bei der Positionierungseinrichtung und den Montagemitteln um zueinander korrespondierend ausgebildete, miteinander verschraubbare Schraubelemente, insbesondere Gewindebolzen, Durchgriffsöffnung und Mutter oder Schraube, Durchgriffsöffnung und Gewindebohrung, handeln.

Weiterhin kann vorgesehen sein, dass der Anschlussverbinder der Zufuhrleitung und der Anschlussverbinder der Abfuhrleitung gemeinsam an dem Verbinderhalter jeweils in einer Verbinderaufnahme rastend angeordnet sind. Insbesondere sieht es die Ausführung dabei vor, dass der Verbinderhalter zwei Verbinderaufnahmen, jeweils eine für jeden Anschlussverbinder, aufweist. Vorteilhaft reduziert ein derartiger Verbinderhalter die Anzahl an bevorzugten Montagemitteln und Positionierungseinrichtungen, so dass der Aufwand zur Herstellung und Montage verringert wird. Auch kann vorgesehen sein, dass der Verbinderhalter mehr als zwei, insbesondere vier Verbinderaufnahmen aufweist, so dass beispielsweise zwei Anschlussverbinder von jeweils einer Zufuhrleitung und zwei Anschlussverbinder von jeweils einer Abfuhrleitung gemeinsam an dem Verbinderhalter angeordnet sind. Die Ausführung mit vier Verbinderaufnahmen kann insbesondere vorteilhaft sein, wenn exemplarisch die Anschlüsse zweier zu temperierender Batteriemodule einer Batterie dicht beieinander angeordnet sind.

Eine Verbesserung der Montage kann zudem dadurch erreicht werden, dass gemäß einer vorteilhaften Variante der Verbinderhalter zumindest eine C-förmige Verbinderaufnahme mit zwei radialelastischen Haltearmen aufweist. Die Haltearme umgreifen dabei klammernd vorzugsweise einen zylindrischen Lagerabschnitt des Anschlussverbinders. Die Verbinderaufnahme und der Anschlussverbinder sind gemäß einer optionalen ergänzenden Ausführung derartig korrespondierend zueinander ausgebildet, dass der Anschlussverbinder gegen eine Verschiebung axial zu einer Längsachse des zylindrischen Lagerabschnitts blockiert und gegen eine Rotation um die Längsachse des zylindrischen Lagerabschnitts kraftformschlüssig in zumindest einer Einbaulage reversibel fixiert ist.

Durch die C-förmige Ausbildung der Verbinderaufnahme und die radialelastischen Haltearme sind die Anschlussverbinder zweckmäßig aufwandsarm, insbesondere ohne Werkzeug, in der Verbinderaufnahme anordenbar. Insbesondere ist diese Ausführung bei einem geringen Bauraum vorteilhaft, welcher die Verwendung von Werkzeug erschwert.

Eine vorteilhafte Variante sieht zudem vor, dass der Anschlussverbinder im Lagerabschnitt und die Haltearme der Verbinderaufnahme derartig zueinander korrespondierende Rastmittel aufweisen, dass der Anschlussverbinder in zumindest zwei zueinander um die Längsachse des zylindrischen Lagerabschnitts verdrehten Einbaulagen kraftformschlüssig in der Verbinderaufnahme fixierbar ist. Die unterschiedlichen Einbaulagen verbessern die Anpassungsfähigkeit der Fluidverteileranordnung an unterschiedliche Einbauverhältnisse, indem eine bestimmte Anschlussrichtung der jeweiligen Zu- bzw. Abfuhrleitung relativ zu der Längsachse des zylindrischen Lagerabschnitts des Anschlussverbinders konfigurierbar ist. Zweckmäßig kann dadurch ein bestimmter Verlauf der Zu- bzw. Abfuhrleitung eingestellt bzw. gesichert werden. Weiterhin lassen sich durch die unterschiedlichen Einbaulagen nachteilige Knickstellen in den Zu- bzw. Abfuhrleitungen vermeiden.

Gemäß einer besonderen Ausführung sind die Rastmittel der Haltearme als eine Zahnstruktur auf der zu dem Lagerabschnitt weisenden Seite der Haltearme ausgebildet. Insbesondere sind die Rastmittel des Lagerabschnitts derart korrespondierend ausgebildet, dass diese in die Zahnstrukturen eingreifen. Es hat sich dafür als vorteilhaft herausgestellt, dass die Rastmittel des Lagerabschnitts als zumindest vier gleichmäßig über den Umfang des Lagerabschnitts verteilte, radial vom Lagerabschnitt abstehende Rastnoppen ausgebildet sind. Die Rastnoppen können dabei in die Verzahnung eingreifen und den Anschlussverbinder kraftformschlüssig gegen eine Rotation um die Längsachse des Lagerabschnitts sichern. Aufgrund der radialelastischen Eigenschaften der Haltearme können dabei die Rastnoppen, zur Verdrehung und Neupositionierung des Anschlussverbinders relativ zu dem Verbinderhalter, aus der Verzahnung herausgehoben werden. Insbesondere können die Zahnstrukturen derart ausgebildet sein, dass bei einem bestimmten Drehmoment die Rastnoppen derart auf die Zahnstrukturen einwirken, dass die kraftformschlüssige Sicherung aufgehoben und die Haltearme radialelastisch gespreizt werden.

Vorzugsweise kann vorgesehen sein, dass die Rastnoppen, die Zahnstruktur und ein Umschlingungswinkel der Haltearme um den Lagerabschnitt derart ausgebildet sind, dass stets mindestens zwei Rastnoppen mit der Zahnstruktur derart in Eingriff stehen, dass der Anschlussverbinder gegen eine Verdrehung um die Längsachse des zylindrischen Lagerabschnitts kraftformschlüssig gehalten ist.

Die der Erfindung zugrunde gelegte Aufgabe wird des Weiteren mit einem erfindungsgemäßen Anschlussverbinder für eine Fluidverteileranordnung nach einer der vorgenannten Ausführungen gelöst. Erfindungsgemäß weist dabei der Anschlussverbinder die Merkmale zumindest einer der vorgenannten Ausführungen auf.

Auch wird die der Erfindung zugrunde gelegte Aufgabe mit einem erfindungsgemäßen Verbinderhalter für zumindest einen Anschlussverbinder der vorgenannten Art einer Fluidverteileranordnung gemäß einer der vorgenannten Ausführungen gelöst. Erfindungsgemäß weist dabei der Verbinderhalter die den Verbinderhalter betreffenden Merkmale nach zumindest einer der vorgenannten Ausführungen auf.

Weitere vorteilhafte Ausgestaltungen der Erfindung ergeben sich aus der folgenden Figurenbeschreibung und den abhängigen Unteransprüchen.

Es zeigen:
- Fig. 1: perspektivisch dargestellte Teilabschnitte einer Fluidverteileranordnung,
- Fig. 2: eine Aufsicht auf einen Teilabschnitt einer Fluidverteileranordnung,
- Fig. 3: eine Schnittansicht durch eine Ausführung eines Verteilerstücks einer Fluidverteileranordnung,
- Fig. 4: einen Ausschnitt einer perspektivischen Ansicht eines Verteilerstücks einer Fluidverteileranordnung und
- Fig. 5: eine Schnittansicht durch eine Ausführung eines in einem Verbinderhalter angeordneten Anschlussverbinders,
- Fig. 6: eine perspektivische Ansicht zweier in einem Verbinderhalter gemeinsam angeordneter Anschlussverbinder mit jeweils einer fluidisch verbundenen Zufuhrleitung und/oder Abfuhrleitung,
- Fig. 7: eine 3D-Schnittansicht durch eine alternative Ausführung eines in einem alternativen Verbinderhalter angeordneten Anschlussverbinders und
- Fig. 8: eine 2D-Schnittansicht durch eine alternative Ausführung eines in einem alternativen Verbinderhalter angeordneten Anschlussverbinders.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

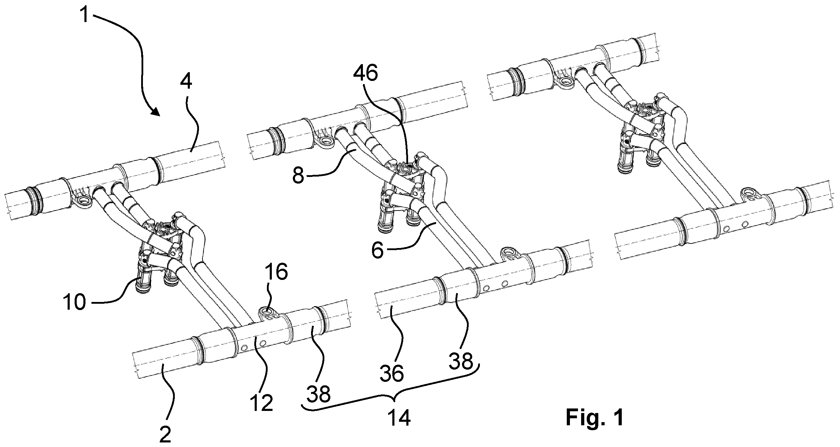

In Fig. 1 ist eine Fluidverteileranordnung 1 eines Temperierkreislaufes dargestellt. Die dargestellte Fluidverteileranordnung 1 ist dabei zum Temperieren eines elektrischen Gerätes ausgebildet. Das elektrische Gerät ist nicht dargestellt, wobei es sich bei dem elektrischen Gerät insbesondere um eine Batterie, zweckmäßig aufweisend mehrere Batteriemodule, handelt.

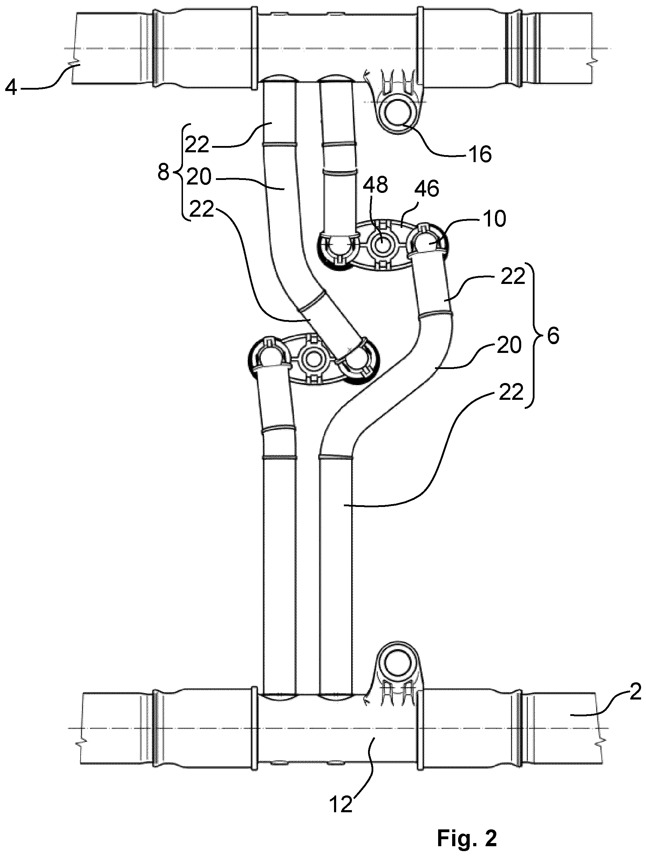

Wie in den Fig. 1 und 2 dargestellt, weist die Fluidverteileranordnung 1 zumindest eine Vorlaufleitung 2 und zumindest eine im Wesentlichen parallel zur Vorlaufleitung 2 verlaufende Rücklaufleitung 4 auf. Dabei ist die Vorlaufleitung 2 mit einem Vorlauf und die Rücklaufleitung 4 mit einem Rücklauf fluidisch verbindbar. Weiterhin ist vorgesehen, dass mittels der Vorlaufleitung 2 und der Rücklaufleitung 4 der Vorlauf und der Rücklauf fluidisch mit dem elektrischen Gerät verbindbar sind.

Insbesondere wird ein Temperierfluid und/oder eine temperiertes Fluid von dem Vorlauf in die Vorlaufleitung 2, aus der Vorlaufleitung 2 zu dem elektrischen Gerät und von dem elektrischen Gerät über die Rücklaufleitung 4 in den Rücklauf geleitet.

Erfindungsgemäß ist vorgesehen, dass, wie in den Fig. 1 und 2 dargestellt, die Vorlaufleitung 2 mittels zumindest einer Zufuhrleitung 6 mit einem Anschlussverbinder 10 zur fluidischen Verbindung mit dem elektrischen Gerät verbunden ist. Des Weiteren ist die Rücklaufleitung 4, gemäß der erfindungsgemäßen Ausführung, mittels zumindest einer Abfuhrleitung 8 mit einem weiteren Anschlussverbinder 10 zur fluidischen Verbindung mit dem elektrischen Gerät verbunden. Diese erfindungsgemäße Ausführung ermöglicht dabei die erfindungsgemäße Anordnung, dass, wie in den Fig. 1 und 2 dargestellt, die Vorlaufleitung 2 und die Rücklaufleitung 4 derart zueinander beabstandet angeordnet sind, dass die Zufuhrleitung 6 und die Abfuhrleitung 8 und die jeweiligen Anschlussverbinder 10 zwischen der Vorlaufleitung 2 und der Rücklaufleitung 4 angeordnet sind.

Insbesondere weist das als Batterie mit mehreren Batteriemodulen ausgebildete elektrische Gerät an jedem Batteriemodul ein Anschlussmittel zur fluidischen Verbindung mit dem Anschlussverbinder 10 der Zufuhrleitung 6 ein Anschlussmittel zur fluidischen Verbindung mit dem Anschlussverbinder 10 der Abfuhrleitung 8 auf.

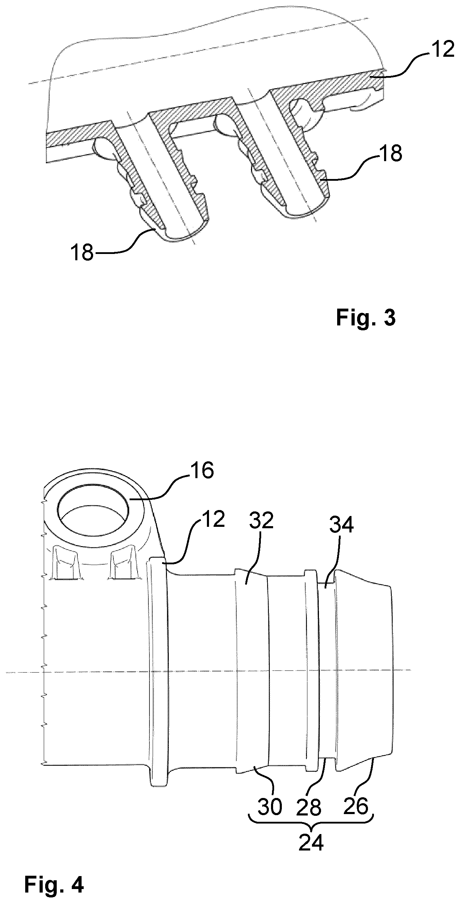

In Fig. 3 ist eine vorteilhafte Ausführung eines Verteilerstücks 12, welches an der Vorlaufleitung 2 und/oder Rücklaufleitung 4 angeordnet bzw. ausgebildet ist, dargestellt. Vorzugsweise ist mittels des Verteilerstücks 12 die Vorlaufleitung 2 fluidisch mit der Zufuhrleitung 6 und/oder die Rücklaufleitung 4 fluidisch mit der Abfuhrleitung 8 verbunden. In dem Ausführungsbeispiel gemäß Fig. 1 weisen exemplarisch die Vorlaufleitung 2 und die Rücklaufleitung 4 mehrere Verteilerstücke 12, insbesondere jeweils neun Verteilerstücke 12, auf. Vorzugsweise sind die Verteilerstücke 12 dabei voneinander in gleichen und/oder unterschiedlichen Abständen angeordnet und durch zwischen den jeweiligen Verteilerstücken ausgebildete Rohrleitungselemente 14 fluidisch verbunden.

Vorteilhaft weist das Verteilerstück 12 eine Montageeinrichtung 16 auf. Mittels der Montageeinrichtung 16 ist das Verteilerstück 12 an einer bestimmen Position montierbar. Zweckmäßig ist die Montageeinrichtung 16, wie in Fig. 4 dargestellt, als eine an einer Lagerlasche ausgebildete Bohrung ausgebildet, so dass das Verteilerstück 12 bzw. die Montageeinrichtung 16 an einer bestimmten Position mit einem korrespondierenden Gegenstück verschraubt werden kann.

Insbesondere kann, wie in den Fig. 1 bis 3 dargestellt, vorgesehen sein, dass an das jeweilige Verteilerstück 12 mehr als eine Zufuhrleitung 6 bzw. Abfuhrleitung 8 anschließbar bzw. angeschlossen ist. Exemplarisch sind an die in den Fig. 1 bis 3 dargestellten Ausführungen der Verteilerstücke 12 jeweils zwei Zufuhrleitungen 6 oder zwei Abfuhrleitungen 8 anschließbar bzw. angeschlossen.

Gemäß der vorteilhaften, in Fig. 3 dargestellten, Ausführung des Verteilerstücks 12 weist dieses mindestens ein Verbindungselement 18 zum fluidischen Steckverbinden der Zufuhrleitung 6 oder der Abfuhrleitung 8 auf. In den Fig. 1 und 2 sind die Zufuhrleitung 6 und Abfuhrleitung 8 jeweils in einem mit den Verbindungselementen verbundenen Zustand dargestellt. Es hat sich dabei als vorteilhaft erwiesen, dass das/die Verbindungselemente 18, wie in Fig. 3 dargestellt, als Aufsteckdorn(e) ausgebildet ist/sind. Zweckmäßig ist auf den jeweiligen Aufsteckdorn die Zufuhrleitung 6 oder die Abfuhrleitung 8 aufgesteckt. Entsprechend der vorgenannten vorteilhaften Variante des Verteilerstücks 12, an welches mehr als eine Zufuhrleitung 6 bzw. Abfuhrleitung 8 anschließbar bzw. angeschlossen ist, weist das jeweilige Verteilerstück 12 eine entsprechende Anzahl an Verbindungselementen, insbesondere wie in Fig. 3 dargestellt Aufsteckdorne, auf.

Eine besondere Ausführung der Fluidverteileranordnung 1 sieht vor, dass vorteilhaft die Zufuhrleitung 6 und/oder die Abfuhrleitung 8 zumindest einen Wellrohrabschnitt 20 mit einem gewellten Rohrmantel und zumindest zwei Glattrohrabschnitte 22 mit einem glatten Rohrmantel aufweisen. Diese Ausführung ist insbesondere in Fig. 2 dargestellt. Zweckmäßig kann dabei vorgesehen sein, dass der zumindest eine Wellrohrabschnitt 20 zwischen den Glattrohrabschnitten 22 ausgebildet ist.

Vorzugsweise weist die Vorlaufleitung 2 und/oder die Rücklaufleitung 4 zumindest ein Rohrleitungselement 14 auf. Insbesondere ist jeweils ein Rohrleitungselement 14 zwischen zwei Verteilerstücken 12 angeordnet bzw. mit den jeweiligen Verteilerstücken 12, wie in Fig. 1 dargestellt, fluidisch verbunden. Zu diesem Zweck sieht es eine besondere Variante vor, dass die Verteilerstücke 12 einen Anschlussabschnitt 24, beispielsweise eine Aufsteckgeometrie oder Einsteckgeometrie, aufweisen. Vorteilhafte Ausführungen können dabei darin bestehen, dass die jeweiligen Rohrleitungselemente 14 kraftformschlüssig und/oder stoffschlüssig, insbesondere durch Laserschweißen oder Kleben, mit dem Anschlussabschnitt 24 verbunden sind.

In Fig. 4 ist eine besondere Ausführung des Verteilerstücks 12 dargestellt, gemäß welcher der Anschlussabschnitt 24 als eine Aufsteckgeometrie ausgebildet ist. Vorteilhaft kann die Aufsteckgeometrie dabei einen konusartigen Einsteckabschnitt 26 aufweisen, welcher konusartig im Durchmesser erweiternd in einen Dichtungsabschnitt 28 übergeht, wobei zweckmäßig dem Dichtungsabschnitt 28 nachgelagert ein Halteabschnitt 30, insbesondere mit einem radial nach außen abstehenden, zweckmäßig vollumfänglichen Halteelement 32, angeordnet ist. Vorteilhaft kann das Halteelement 32 als ein umlaufender Haltezahn, wie in Fig. 4 dargestellt, ausgebildet sein. Eine weitere vorteilhafte Variante kann vorsehen, dass in dem Dichtungsabschnitt 28 eine Dichtungsnut 34 zur Aufnahme einer Ringdichtung ausgebildet ist bzw. eine Ringdichtung in der Dichtungsnut 34 aufgenommen ist.

Auch kann vorteilhaft vorgesehen sein, dass die Vorlaufleitung 2 und/oder die Rücklaufleitung 4, insbesondere deren jeweilige Rohrleitungselemente 14, wie exemplarisch in Fig. 1 dargestellt, zumindest einen Wellrohrabschnitt 36 mit einem gewellten Rohrmantel und zumindest zwei Glattrohrabschnitte 38 mit einem glatten Rohrmantel aufweisen. Insbesondere sind die Verteilerstücke 12 als Glattrohrabschnitte 38 ausgebildet und/oder in Glattrohrabschnitten 38 der jeweiligen Vorlaufleitung 2 bzw. Rücklaufleitung 4, insbesondere den jeweiligen Rohrleitungselementen 14, angeordnet bzw. ausgebildet und/oder mit Glattrohrabschnitten 38 der jeweiligen Vorlaufleitung 2 bzw. Rücklaufleitung 4, insbesondere den jeweiligen Rohrleitungselementen 14, fluidisch verbunden. Es ist dabei von besonderem Vorteil, dass der zumindest eine Wellrohrabschnitt 36 zwischen den Glattrohrabschnitten 38 ausgebildet ist.

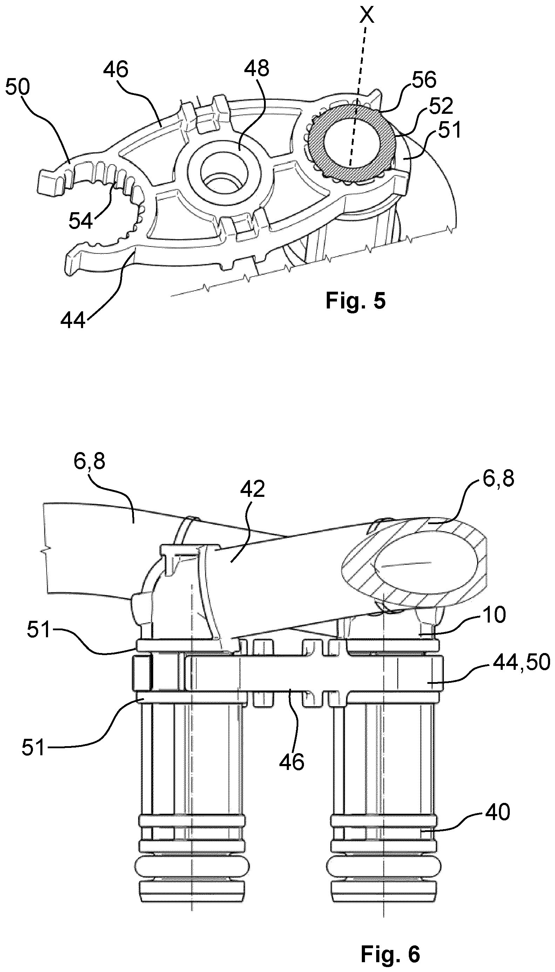

Gemäß einer bevorzugten, insbesondere in Fig. 6 dargestellten, Variante weist der Anschlussverbinder 10 einen Geräteanschluss 40 zum Verbinden mit einem männlichen oder weiblichen Steckanschluss des elektrischen Gerätes und einen Leitungsanschluss 42 zum Verbinden mit der Zufuhrleitung 6 oder Abfuhrleitung 8 auf. Zweckmäßig können der Geräteanschluss 40 und der Steckanschluss des elektrischen Gerätes zueinander korrespondierend für eine rastende Verbindung ausgebildet sein. Exemplarisch ist der Geräteanschluss 40, wie in Fig. 6 dargestellt, als ein männliches Steckerteil ausgebildet, so dass das männliche Steckerteil des Geräteanschlusses 40 in einen muffenartig ausgebildeten Abschnitt des Steckanschlusses eingeführt werden kann.

Insbesondere ist der Anschlussverbinder 10 vorteilhaft als Winkelsteckverbinder ausgebildet. Dabei sind der Geräteanschluss 40 und der Leitungsanschluss 42 zweckmäßig in einem Winkel zueinander ausgebildet. Es hat sich dabei als vorteilhaft herausgestellt, wenn dieser Winkel 90°, insbesondere 100°, wie exemplarisch in Fig. 6 dargestellt, beträgt.

Eine weitere optionale Variante sieht vor, dass zumindest ein Anschlussverbinder 10 in einer Verbinderaufnahme 44 eines Verbinderhalters 46 rastend angeordnet ist. Eine bevorzugte Ausführung des Verbinderhalters 46 mit einem in seiner Verbinderaufnahme 44 angeordneten Anschlussverbinder 10 ist exemplarisch in Fig. 5 dargestellt. Gemäß der dargestellten bevorzugten Ausführung des Verbinderhalters 46 weist dieser zwei Verbinderaufnahmen 44 auf. Zweckmäßig kann dabei vorgesehen sein, dass in den zwei Verbinderaufnahmen 44 jeweils ein Anschlussverbinder 10 der Zufuhrleitungen 6 oder jeweils ein Anschlussverbinder 10 der Abfuhrleitungen 8 angeordnet ist.

Insbesondere ist der Verbinderhalter 46 derart ausgebildet, dass der Anschlussverbinder 10 bzw. der Geräteanschluss 40 des Anschlussverbinders 10 axial zu dem Steckanschluss gehalten ist, vorzugsweise, dass der Geräteanschluss 40 mit dem männlichen Steckerteil in dem muffenartig ausgebildeten Abschnitt des Steckanschlusses gehalten ist.

Gemäß einer besonders bevorzugten Ausführung sind der Anschlussverbinder 10 der Zufuhrleitung 6 und der Anschlussverbinder 10 der Abfuhrleitung 8 gemeinsam an dem Verbinderhalter 46 jeweils in einer Verbinderaufnahme 44 rastend angeordnet. Insbesondere ist diese Ausführung in den Fig. 1 und 6 dargestellt.

Vorteilhaft weist der Verbinderhalter 46 ein Montagemittel 48 zur Fixierung an einer Positionierungseinrichtung, insbesondere zur Fixierung an dem elektrischen Gerät selbst, auf. Wie in Fig. 5 dargestellt, kann das Montagemittel 48 als eine Durchgriffsöffnung ausgebildet sein, durch welche eine Schraube oder ein Gewindebolzen hindurchgeführt und mit einem korrespondierenden Gewindeelement, wie einer Mutter oder einer Gewindebohrung, verschraubt werden kann.

Entsprechend einer weiteren optionalen Ausführung weist der Verbinderhalter 46 zumindest eine C-förmige Verbinderaufnahme 44 mit zwei radialelastischen Haltearmen 50 auf. Zweckmäßig weist der in Fig. 5 dargestellte Verbinderhalter 46 zwei C-förmige Verbinderaufnahmen 44 auf. Die C-förmige Verbinderaufnahme 44 ist dabei derart ausgebildet, dass sie, wie in Fig. 5 dargestellt, einen zylindrischen Lagerabschnitt 52 des Anschlussverbinders 10 klammernd umgreift.

Zweckmäßig ist die, insbesondere C-förmige, Verbinderaufnahme 44 und der Anschlussverbinder 10 derartig korrespondierend zueinander ausgebildet, dass der Anschlussverbinder 10 gegen eine Verschiebung axial zu einer Längsachse X des zylindrischen Lagerabschnitts 52 blockiert und gegen eine Rotation um die Längsachse X des zylindrischen Lagerabschnitts 52 kraftformschlüssig in zumindest einer Einbaulage reversibel fixiert ist. Insbesondere ist der Lagerabschnitt 52 des Anschlussverbinders 10 als eine umlaufende Lagernut, welche, wie in Fig. 6 dargestellt, durch zwei axial zur Längsachse X beabstandete Nutwände 51 ausgebildet ist, ausgebildet. Zweckmäßig sind die Nutwände 51 dabei derart ausgebildet und angeordnet, dass die radialelastischen Haltearme 50 der Verbinderaufnahme 44 formschlüssig in axialer Richtung zu der Längsachse X blockiert werden, so dass die Verschiebung des Anschlussverbinders 10 axial zu seiner Längsachse X im Lagerabschnitt 52 blockiert ist.

Eine bestimmte optionale Ausführung besteht darin, dass der Anschlussverbinder 10 im Lagerabschnitt 52 und die Haltearme 50 der Verbinderaufnahme 44 derartig zueinander korrespondierende Rastmittel aufweisen, dass der Anschlussverbinder 10 in zumindest zwei zueinander um die Längsachse X des zylindrischen Lagerabschnitts 52 verdrehten Einbaulagen kraftformschlüssig in der Verbinderaufnahme 44 fixierbar ist. Insbesondere kann diese Variante mittels einer Zahnstruktur 54 an den Haltearmen 50 bereitgestellt werden.

Wie in Fig. 5 dargestellt, sind die Rastmittel der Haltearme 50 dementsprechend vorteilhaft als Zahnstruktur 54 auf der zu dem Lagerabschnitt 52 weisenden Seite der Haltearme 50 ausgebildet. Korrespondierend dazu sind die Rastmittel des Lagerabschnitts 52 zweckmäßig, wie dargestellt, als zumindest vier gleichmäßig über den Umfang des Lagerabschnitts 52 verteilte, radial vom Lagerabschnitt 52 abstehende Rastnoppen 56 ausgebildet. Durch die gleichmäßig umfangsgemäße Verteilung der Rastnoppen 56 und eine vorteilhafte Ausführung der Zahnstruktur 54 und eines Umschlingungswinkels der Haltearme 50 um den Lagerabschnitt 52 kann zweckmäßig eine Ausführung bereitgestellt werden, gemäß welcher stets mindestens zwei Rastnoppen 56 mit der Zahnstruktur 54 derart in Eingriff stehen, dass der Anschlussverbinder 10 gegen eine Verdrehung um die Längsachse X des zylindrischen Lagerabschnitts 52 kraftformschlüssig gehalten ist. Durch die Gestaltung der Zahnstruktur 54 kann dabei die Auflösung bzw. die Anzahl an möglicher Einbaulagen des Anschlussverbinders 10 relativ zur Verbinderaufnahme 44 bzw. Verbinderhalter 46 eingestellt werden.

Zweckmäßig kann vorgesehen sein, dass die Zahnstruktur 54 und die Rastnoppen 56 derart ausgebildet sind, dass bei einem bestimmten Drehmoment auf den Anschlussverbinder 10 um die Längsachse X des Lagerabschnitts 52 die Rastnoppen 56 derart auf die Zahnstruktur 56 einwirken, dass die radialelastischen Haltearme 50 aufgeweitet und dadurch die Rastnoppen 56 aus der Zahnstruktur 54 herausgehoben werden. Insbesondere hat dies zur Folge, dass die kraftformschlüssige Sicherung aufgehoben wird und eine Verdrehung und Neupositionierung des Anschlussverbinders 10 relativ zu dem Verbinderhalter 46 möglich ist.

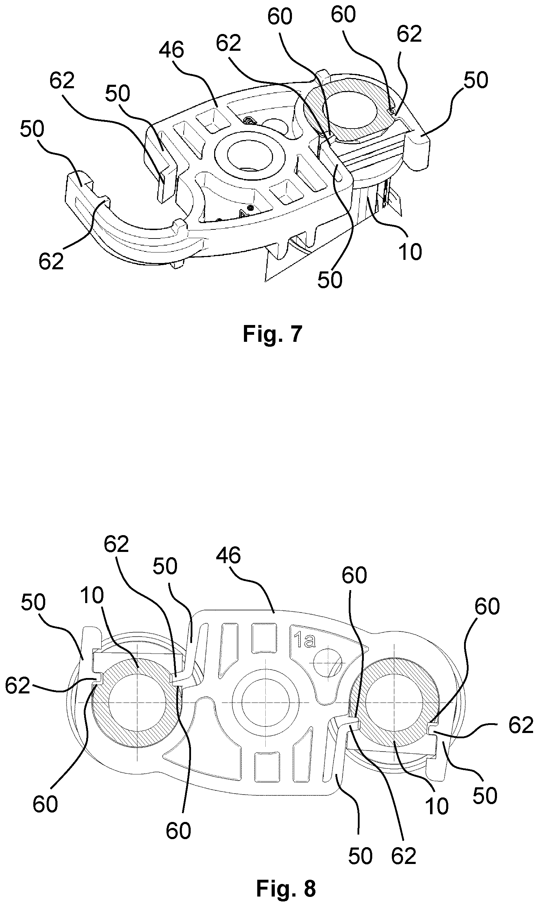

In einer alternativen Ausgestaltung des Verbinderhalters 46 und des Anschlussverbinders 10 gemäß Fig. 7 und Fig. 8 sind die Anschlussverbinder 10 nicht mehr drehbar in verschiedenen Winkelpositionen verrastbar, sondern in der jeweiligen Endposition in den Verbinderhaltern 46 aufgenommen. Die Winkelpositionen der Anschlussverbinder 10 sind somit nach dem Einstecken der Anschlussverbinder 10 in den Verbinderhalter 46 formschlüssig definiert. Vorzugsweise weist dazu der Anschlussverbinder 10 an seinem Außenumfang mindestens eine Haltenut 60, vorzugsweise zwei axial verlaufende Haltenuten 60 auf, und der Verbinderhalter 46 weist mindestens einen Haltefortsatz 62, vorzugsweise zwei Haltefortsätze 62, auf, die derart zueinander angeordnet und ausgebildet sind, dass der Anschlussverbinder 10 in einer einzigen definierten Position durch ein Eingreifen der Haltefortsätze 62 in den Haltenuten 60 gehalten wird. Insbesondere ist mindestens ein Haltefortsatz 62 an einem elastisch verformbaren Haltearm 50 angeordnet, der bezogen auf den Anschlussverbinder 10 radial und/oder umfangsgemäß elastisch bewegbar ist, so dass der Anschlussverbinder 10 beim Einsetzen in den Verbinderhalter 46 zunächst in einer beliebigen Winkelposition einsetzbar ist und dann durch eine umfangsgemäße Drehung um die eigene Achse in die definierte Endposition formschlüssig einrastet. Dabei gleiten die Haltefortsätze 62 in die Haltenuten 60. Insbesondere ist zumindest einer der Haltearme 50 zum Lösen des Anschlussverbinders 10 aus dem Verbinderhalter 46 manuell elastisch verformbar, so dass die Haltefortsätze 62 aus den Haltenuten 10 herausfahrbar sind und der Anschlussverbinder 10 aus der Endposition herausdrehbar und aus dem Verbinderhalter 46 entnehmbar ist.

Ein erfindungsgemäßer Anschlussverbinder 10 für eine Fluidverteileranordnung 1 nach einer der vorhergehenden Ausführungen weist die den Anschlussverbinder 10 betreffenden Merkmale zumindest einer der vorgenannten Ausführungen auf.

Ein erfindungsgemäßer Verbinderhalter 46 für einen Anschlussverbinder 10 einer Fluidverteileranordnung 1 nach einer der vorhergehenden Ausführungen weist die den Verbinderhalter 46 betreffenden Merkmale zumindest einer der vorgenannten Ausführungen auf.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1, 13 oder 14 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1, 13 oder 14 weggelassen beziehungsweise durch mindestens ein an anderer Stelle der Anmeldung offenbartes Einzelmerkmal ersetzt werden kann.

### Bezugszeichenliste

- 1: Fluidverteileranordnung
- 2: Vorlaufleitung
- 4: Rücklaufleitung
- 6: Zufuhrleitung
- 8: Abfuhrleitung
- 10: Anschlussverbinder
- 12: Verteilerstück
- 14: Rohrleitungselement
- 16: Montageeinrichtung
- 18: Verbindungselement
- 20: Wellrohrabschnitt der Zu- oder Abfuhrleitung
- 22: Glattrohrabschnitt der Zu- oder Abfuhrleitung
- 24: Anschlussabschnitt
- 26: Einsteckabschnitt
- 28: Dichtungsabschnitt
- 30: Halteabschnitt
- 32: Halteelement
- 34: Dichtungsnut
- 36: Wellrohrabschnitt der Vor- oder Rücklaufleitung
- 38: Glattrohrabschnitt der Vor- oder Rücklaufleitung
- 40: Geräteanschluss
- 42: Leitungsanschluss
- 44: Verbinderaufnahme
- 46: Verbinderhalter
- 48: Montagemittel
- 50: Haltearm
- 51: Nutwand
- 52: Lagerabschnitt
- 54: Zahnstruktur
- 56: Rastnoppen
- X: Längsachse des Lagerabschnitts des Anschlussverbinders
- 60: Haltenut
- 62: Haltefortsatz

## Patentansprüche

1. Fluidverteileranordnung (1) eines Temperierkreislaufes zum Temperieren eines elektrischen Gerätes, insbesondere einer Batterie, aufweisend zumindest eine Vorlaufleitung (2), welche mit einem Vorlauf fluidisch verbindbar ist, und zumindest eine im Wesentlichen parallel zur Vorlaufleitung (2) verlaufende Rücklaufleitung (4), welche mit einem Rücklauf fluidisch verbindbar ist, wobei mittels der Vorlaufleitung (2) und der Rücklaufleitung (4) der Vorlauf und der Rücklauf fluidisch mit dem elektrischen Gerät verbindbar sind,
**dadurch gekennzeichnet, dass**
die Vorlaufleitung (2) mittels zumindest einer Zufuhrleitung (6) mit einem Anschlussverbinder (10) zur fluidischen Verbindung mit dem elektrischen Gerät verbunden ist und die Rücklaufleitung (4) mittels zumindest einer Abfuhrleitung (8) mit einem weiteren Anschlussverbinder (10) zur fluidischen Verbindung mit dem elektrischen Gerät verbunden ist und die Vorlaufleitung (2) und die Rücklaufleitung (4) derart zueinander beabstandet angeordnet sind, dass die Zufuhrleitung (6) und die Abfuhrleitung (8) und die jeweiligen Anschlussverbinder (10) zwischen der Vorlaufleitung (2) und der Rücklaufleitung (4) angeordnet sind.

2. Fluidverteileranordnung (1) nach Anspruch 1,
**dadurch gekennzeichnet, dass**
die Vorlaufleitung (2) mittels eines Verteilerstücks (12) fluidisch mit der Zufuhrleitung (6) und/oder die Rücklaufleitung (4) mittels eines Verteilerstücks (12) fluidisch mit der Abfuhrleitung (8) verbunden ist.

3. Fluidverteileranordnung (1) nach Anspruch 2,
**dadurch gekennzeichnet, dass**
das Verteilerstück (12) mindestens ein Verbindungselement (18) zum fluidischen Steckverbinden der Zufuhrleitung (6) oder der Abfuhrleitung (8) aufweist.

4. Fluidverteileranordnung (1) nach Anspruch 3,
**dadurch gekennzeichnet, dass**
das Verbindungselement (18) als ein Aufsteckdorn ausgebildet ist, auf welchen die Zufuhrleitung (6) oder die Abfuhrleitung (8) aufgesteckt ist.

5. Fluidverteileranordnung (1) nach einem der vorhergehenden Ansprüche, **dadurch gekennzeichnet, dass**
die Zufuhrleitung (6) und/oder die Abfuhrleitung (8) zumindest einen Wellrohrabschnitt (20) mit einem gewellten Rohrmantel und zumindest zwei Glattrohrabschnitte (22) mit einem glatten Rohrmantel aufweist, wobei der zumindest eine Wellrohrabschnitt (20) zwischen den Glattrohrabschnitten ausgebildet ist.

6. Fluidverteileranordnung (1) nach einem der vorhergehenden Ansprüche, **dadurch gekennzeichnet, dass**
der Anschlussverbinder (10) einen Geräteanschluss (40) zum Verbinden mit einem männlichen oder weiblichen Steckanschluss des elektrischen Gerätes und einen Leitungsanschluss (42) zum Verbinden mit der Zufuhrleitung (6) oder Abfuhrleitung (8) aufweist.

7. Fluidverteileranordnung (1) nach Anspruch 6,
**dadurch gekennzeichnet, dass**
der Anschlussverbinder (10) als Winkelsteckverbinder ausgebildet ist, wobei der Geräteanschluss (40) und der Leitungsanschluss (42) in einem Winkel, insbesondere in einem Winkel von 90°, zueinander ausgebildet sind.

8. Fluidverteileranordnung (1) nach einem der vorhergehenden Ansprüche, **dadurch gekennzeichnet, dass**
zumindest ein Anschlussverbinder (10) in einer Verbinderaufnahme (44) eines Verbinderhalters (46) rastend angeordnet ist, wobei der Verbinderhalter (46) ein Montagemittel (48) zur Fixierung an einer Positionierungseinrichtung, insbesondere zur Fixierung an dem elektrischen Gerät selbst, aufweist.

9. Fluidverteileranordnung (1) nach Anspruch 8,
**dadurch gekennzeichnet, dass**
der Anschlussverbinder (10) der Zufuhrleitung (6) und der Anschlussverbinder (10) der Abfuhrleitung (8) gemeinsam an dem Verbinderhalter (46) jeweils in einer Verbinderaufnahme (44) rastend angeordnet sind.

10. Fluidverteileranordnung (1) nach Anspruch 8 oder 9,
**dadurch gekennzeichnet, dass**
der Verbinderhalter (46) zumindest eine C-förmige Verbinderaufnahme (44) mit zwei radialelastischen Haltearmen (50) aufweist, welche einen zylindrischen Lagerabschnitt (52) des Anschlussverbinders (10) klammernd umgreifen, wobei die Verbinderaufnahme (44) und der Anschlussverbinder (10) derartig korrespondierend zueinander ausgebildet sind, dass der Anschlussverbinder (10) gegen eine Verschiebung axial zu einer Längsachse (X) des zylindrischen Lagerabschnitts (52) blockiert und gegen eine Rotation um die Längsachse (X) des zylindrischen Lagerabschnitts (52) formschlüssig oder kraftformschlüssig in zumindest einer Einbaulage reversibel fixiert ist.

11. Fluidverteileranordnung (1) nach Anspruch 10,
**dadurch gekennzeichnet, dass**
der Anschlussverbinder (10) im Lagerabschnitt (52) und die Haltearme (50) der Verbinderaufnahme (44) derartig zueinander korrespondierende Rastmittel aufweisen, dass der Anschlussverbinder (10) in zumindest zwei zueinander um die Längsachse (X) des zylindrischen Lagerabschnitts (52) verdrehten Einbaulagen kraftformschlüssig in der Verbinderaufnahme (44) fixierbar ist.

12. Fluidverteileranordnung (1) nach Anspruch 11,
**dadurch gekennzeichnet, dass**
die Rastmittel der Haltearme (50) als eine Zahnstruktur (54) auf der zu dem Lagerabschnitt (52) weisenden Seite der Haltearme (50) ausgebildet sind, wobei die Rastmittel des Lagerabschnitts (52) als zumindest vier gleichmäßig über den Umfang des Lagerabschnitts (52) verteilte, radial vom Lagerabschnitt (52) abstehende Rastnoppen (56) ausgebildet sind, wobei die Rastnoppen (56), die Zahnstruktur (54) und ein Umschlingungswinkel der Haltearme (50) um den Lagerabschnitt (52) derart ausgebildet sind, dass stets mindestens zwei Rastnoppen (56) mit der Zahnstruktur (54) derart in Eingriff stehen, dass der Anschlussverbinder (10) gegen eine Verdrehung um die Längsachse (X) des zylindrischen Lagerabschnitts (52) kraftformschlüssig gehalten ist.

13. Anschlussverbinder (10) für eine Fluidverteileranordnung (1) nach einem der vorhergehenden Ansprüche,
**gekennzeichnet durch**
die den Anschlussverbinder (10) betreffenden Merkmale nach einem der Ansprüche 6 bis 12.

14. Verbinderhalter (46) für zumindest einen Anschlussverbinder (10) nach Anspruch 13 einer Fluidverteileranordnung (1) nach einem der Ansprüche 1 bis 12,
**gekennzeichnet durch**
die den Verbinderhalter (46) betreffenden Merkmale nach einem der Ansprüche 8 bis 12.
